# EUROPÄISCHE PATENTSCHRIFT

(11) **EP 1 761 363 B1**
(45) Veröffentlichungstag und Bekanntmachung des Hinweises auf die Patenterteilung: **10.01.2018**
(21) Anmeldenummer: 05741352.8
(22) Anmeldetag: 03.05.2005
(51) Int. Cl.: B25J 9/16, G01B 11/00, G01B 21/04

(54) **Hilfsvorrichtung und Verfahren zum Einmessen einer an einem Manipulator montierbaren optischen Messanordnung**
Auxiliary device and method for calibrating an optical measurement array which can be mounted on a manipulator
Dispositif auxiliaire et méthode pour calibrer un dispositif de mesure optique qui peut être monté sur un manipulateur

(30) Priorität: 04.05.2004 DE 102004021892
(43) Veröffentlichungstag der Anmeldung: 14.03.2007
(73) Patentinhaber: KUKA Roboter GmbH, 86165 Augsburg (DE)
(72) Erfinder: IBACH, Thomas, 77836 Rheinmünster-Greffern (DE); LAUBEL, Bernhard, 76476 Bischweier (DE); LESKOVAR, Matej, 81667 München (DE); LINNENBAUM, Holger, 76437 Rastatt (DE); PASKUDA, Martin, 76479 Steinmauern (DE)
(74) Vertreter: Isarpatent
(86) Internationale Anmeldenummer: PCT/EP2005/004796
(87) Internationale Veröffentlichungsnummer: WO 2005/108020

(56) Entgegenhaltungen:
- EP-A- 0 114 505
- WO-A-01/00370
- WO-A-97/46925

## Beschreibung

Die Erfindung betrifft eine Hilfsvorrichtung und ein Verfahren zum Einmessen einer an einem Manipulator montierbaren optischen Messanordnung.
Aus der US 6 321 137 B1 ist ein robotergeführter optischer Sensor bekannt, mit Hilfe dessen im Produktionsumfeld Werkstücke, beispielsweise Fahrzeugkarosserien, an einem oder mehreren Messbereichen vermessen werden können. Der optische Sensor ist an der Roboterhand befestigt und wird mit Hilfe des Roboters in ausgewählten Messbereichen gegenüber dem Werkstück positioniert. Die Verwendung eines optischen Sensors hat den Vorteil, dass ein solche Sensor berührungslos misst und sich daher gegenüber einem taktilen Sensor durch eine wesentlich höhere Messgeschwindigkeit und eine geringere Schwingungsempfindlichkeit auszeichnet, wodurch schnelle und robuste Messungen im Produktionsumfeld möglich werden. Eine Positionierung des optischen Sensors mit Hilfe eines Roboters hat den zusätzlichen Vorteil einer hohen Flexibilität und reduzierter Kosten; weiterhin lassen sich mit Hilfe der Roboterpositionierung eine gute Reproduzierbarkeit und Genauigkeit der Messergebnisse erreichen.

Voraussetzung hierfür ist allerdings, dass vor dem eigentlichen Messbetrieb eine hochgenaue Kalibrierung des Gesamtsystems - bestehend aus Roboter und optischem Sensor - durchgeführt wird. Hierbei wird in der Regel zunächst der Roboter kalibriert, indem seine Achsenfehler ermittelt und mit Hilfe der Steuerung kompensiert werden. Weiterhin wird das optische Sensorsystem kalibriert, wobei Fehler der Sensoroptik kompensiert und die Lage des Sensorkoordinatensystems gegenüber einem äußeren Bezugspunkt, beispielsweise dem Sensorgehäuse, ermittelt wird. Weiterhin ist es notwendig, den Bezug zwischen der Lage des Sensorkoordinatensystems und der Lage des Roboterkoordinatensystems herzustellen, um die Lage von Messpunkten des Sensors im Roboterkoordinatensystem ermitteln zu können.
In der US 6 321 137 B1 wird hierzu vorgeschlagen, den optischen Sensor mit Hilfe des Roboters in unterschiedliche Raumpositionen gegenüber einem Referenzkörper zu bewegen und aus den in diesen Raumpositionen gewonnenen Sensormessdaten des Referenzkörpers eine Kalibration des Gesamtsystems durchzuführen. Erfahrungsgemäß wird dabei jedoch nur verhältnismäßig geringe Genauigkeit erzielt, die für viele Anwendungen im Produktionsfeld, insbesondere für Messungen an Fahrzeug-Roh-) Karosserien, nicht ausreicht.

Das Dokument WO 01/00370 A1 offenbart ein Verfahren zum mehrstufigen Kalibrieren von mehrachsigen Robotern und mitgeführten optischen Messeinrichtungen, wobei nacheinander die optische Messeinrichtung mit ihrem Arbeitspunkt, der Manipulator mit seinen Achsen und dann die Zuordnung des Manipulators zum Werkstück kalibriert werden. Ein solches Verfahren ist aufwendig.

Der Erfindung liegt daher die Aufgabe zugrunde, eine Hilfsvorrichtung und ein Verfahren vorzuschlagen, mit Hilfe derer der Einmessvorgang einer robotergeführten optischen Messanordnung schnell und reproduzierbar durchgeführt werden kann. Die Aufgabe wird erfindungsgemäß durch die Merkmale der Ansprüche 1 und 3 gelöst. Die optische Messanordnung weist einen optischen Sensor auf, der mit Hilfe eines Abstandshalters an einem Roboter befestigt ist, wobei auf dem Abstandshalter und/oder dem Sensorgehäuse Messmarken vorgesehen sind. Diese Messmarken sind beispielsweise durch Stahlkugeln gebildet, deren Mittelpunkte mit Hilfe eines taktilen Messmittels, insbesondere durch den Messfühler einer Koordinatenmessmaschine, mit hoher Genauigkeit ermittelt werden können. Alternativ können die Messmarken durch Retroreflektoren gebildet sein, was eine hochgenaue Messung der Position dieser Messmarken mit Hilfe eines Lasertrackers ermöglicht. In einer besonders vorteilhaften Ausgestaltung sind die Messmarken Retroreflektorkugeln, was sowohl eine taktile als auch eine optische Messung der Positionen dieser Messmarken gestattet. Zweckmäßigerweise sind diese Kugeln in einer solchen Weise lösbar an der optischen Messanordnung befestigt, dass sie (während des Messbetriebs) entfernt werden können, aber für eine Kalibration bzw. Überprüfungsmessung in hochgenau reproduzierbarer Weise an der optischen Messanordnung angebracht werden können.

Zum Einmessen des optischen Sensors kommt erfindungsgemäß eine Hilfsvorrichtung zum Einsatz, die - vorteilhafterweise in einer hochgenau reproduzierbaren Weise - an der optischen Messanordnung befestigt werden kann. Die Hilfsvorrichtung weist ein Sensortarget auf, das in einer solchen Weise an der Hilfsvorrichtung angeordnet ist, dass es in Zusammenbaulage der Hilfsvorrichtung mit der optischen Messanordnung in einem Messraum des optischen Sensors liegt. Außerdem ist die Hilfsvorrichtung nach der Erfindung mit Messmarken versehen.

Das Einmessen der optischen Messanordnung umfasst eine Bestimmung der Lage des Sensorkoordinatensystems (auch TCP = Tool Center Point genannt) relativ zu den auf der Messanordnung fixierten Messmarken. Hierzu wird die Hilfsvorrichtung an der optischen Messanordnung befestigt. Dann werden mit Hilfe des optischen Sensors eine oder mehrere Messungen des Sensortargets der Hilfsvorrichtung durchgeführt; aus denen die Lage des Sensortargets im Sensorkoordinatensystem ermittelt wird. Weiterhin wird unter Verwendung einer weiteren (optischen oder taktilen) Messvorrichtung die Raumlage der optischen Messanordnung und die Raumlage der Messmarken der Hilfsvorrichtung ermittelt. Aus einer Kombination der Messungen der weiteren Messvorrichtung und der Messungen des Sensors wird die Lage des Sensorkoordinatensystems der optischen Messanordnung relativ zu den Messmarken berechnet.

Eine hochgenaue Ermittlung der Raumlage der Hilfsvorrichtung gegenüber den Messmarken der optischen Messanordnung wird durch die Messmarken der Hilfsvorrichtung erreicht. Durch eine geeignete Anordnung der Messmarken an der optischen Messanordnung und an der Hilfsvorrichtung kann die Raumlage des Sensorkoordinatensystems gegenüber den Messmarken der optischen Messanordnung mit hoher Genauigkeit ermittelt werden. Dieses Einmessen der optischen Messanordnung kann in einem Messraum, beispielsweise in einem (taktilen) Koordinatenmessgerät, erfolgen. Da die für das Einmessen verwendete Hilfsvorrichtung klein, leicht, handlich und robust ist, kann das Einmessen aber auch direkt im Fabrikumfeld an einem Roboter durchgeführt werden, an dessen Roboterhand optische Messanordnung montiert ist. Dann können die auf der optischen Messanordnung befestigten Messmarken zusätzlich dazu verwendet werden, um - beispielsweise mit Hilfe eines Lasertrackers - die Raumlage der optischen Messanordnung relativ zum Roboterkoordinatensystem mit hoher Genauigkeit zu ermitteln und auf diese Weise die Fehler bzw. Ungenauigkeiten bei der Transformation der Sensormesswerte in das Roboterkoordinatensystem zu detektieren bzw. zu kompensieren.

Im folgenden wird die Erfindung anhand eines in den Zeichnungen dargestellten Ausführungsbeispiels näher erläutert. Dabei zeigen:
- Fig. 1: eine schematische Ansicht einer robotergeführten optischen Messanordnung, die an sich nicht Teil der Erfindung ist;
- Fig. 2: eine schematische Darstellung einer erfindungsgemäßen Hilfsvorrichtung zum Einmessen der optischen Messanordnung der Figur 1;

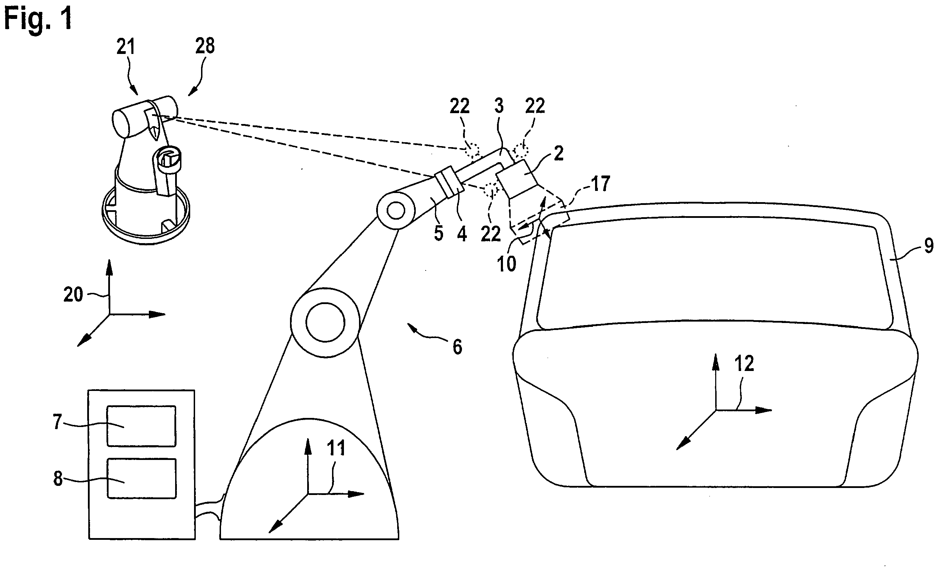

Figur 1 zeigt eine schematische Darstellung einer optischen Messanordnung 1 mit einem optischen Sensor 2, der an einem Abstandshalter 3 befestigt ist. Der Abstandshalter 3 weist einen Flansch 4 auf, mit Hilfe dessen die optische Messanordnung 1 an einer Roboterhand 5 eines mehrachsigen Manipulators, insbesondere eines sechsachsigen Industrieroboters 6, montiert ist. Zur Speicherung und Auswertung der Messdaten des optischen Sensors 2 ist eine Auswerteeinheit 7 vorgesehen. Der Roboter 6 ist an eine Robotersteuereinheit 8 zur Bewegungssteuerung der Roboterhand 5 angeschlossen. Vor dem Messbetrieb wird der Roboter 6 kalibriert, indem seine Achsenfehler ermittelt und mit Hilfe der Steuereinheit 8 kompensiert werden.
Im Messbetrieb werden mit Hilfe des optischen Sensors 2 Messwerte eines Messobjekts 9 gewonnen, wobei diese Messwerte in einem (mit der optischen Messanordnung 1 mitbewegten) Sensorkoordinatensystem 10 erzeugt werden. Um die Messwerte in ein raumfestes Roboterkoordinatensystem 11 oder ein Koordinatensystem 12 des Messobjekts 9 transformieren zu können, muss die Raumlage des Sensorkoordinatensystems 10 im Roboterkoordinatensystem 11 in Abhängigkeit von der Bewegung der Roboterhand 5 bekannt sein. Hierzu ist es notwendig, die optische Messanordnung 1 "einzumessen".

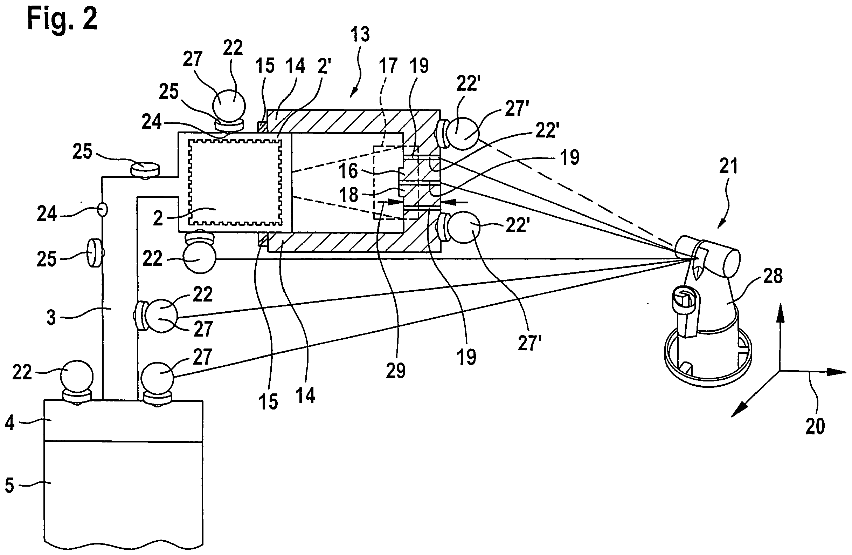

Hierzu wird erfindungsgemäß die in Figur 2 gezeigte Hilfsvorrichtung 13 verwendet. Sie ist in Form einer "Brille" gestaltet, die der optischen Messanordnung 1 für den Einmessvorgang aufgesetzt wird und umfasst daher einen Befestigungsbereich 14, mit Hilfe dessen sie am Gehäuse 2' des Sensors 2 fixiert werden kann. Um eine reproduzierbare Fixierung der Hilfsvorrichtung gegenüber dem Sensor 2 zu gewährleisten, ist das Sensorgehäuse 2' vorteilhafterweise mit Anschlägen 15 versehen, die die Relativlage des Befestigungsbereiches 14 gegenüber dem Sensorgehäuse 2' definieren. An der Hilfsvorrichtung 13 ist ein Sensortarget 16 in einer solchen Weise angeordnet, dass es sich - wenn die Hilfsvorrichtung 13 auf den Sensor 2 aufgesetzt wurde - im Messvolumen 17 des optischen Sensors 2 befindet. Das Sensortarget 16 weist geometrische Merkmale 18, 19 auf, die eine schnelle und hochgenaue Berechnung der Lage und Ausrichtung des Sensors 2 gegenüber dem Sensortarget 16 gestatten. Diese geometrischen Merkmale 18, 19 sind auf das Messprinzip des optischen Sensors 2 abgestimmt. Der optische Sensor 2 des vorliegenden Ausführungsbeispiels ist in der Lage, einerseits (mit Hilfe des Lichtschnittverfahrens) dreidimensionale Messpunkte zu erzeugen, andererseits (mit Hilfe einer Graubildauswertung) zweidimensionale Merkmale zu erkennen. In diesem Fall umfasst das Sensortarget 16 - wie in Figur 2 angedeutet - eine oder mehrere Höhenstufen 18 (deren Raumlage mit Hilfe des Lichtschnittverfahrens gemessen werden kann). Weiterhin umfasst das Sensortarget 16 mehrere Bohrungen 19 (deren Mittelpunkte durch Bildverarbeitung der Graubilder berechnet werden können). Auf diese Weise kann mit hoher Genauigkeit die Raum- und Winkellage des Sensortargets 16 im Sensorkoordinatensystem 10 ermittelt werden.
Um im Zuge des Einmessens der optischen Messanordnung 1 mit Hilfe einer raumfesten Messvorrichtung 21, beispielsweise einem Lasertracker 28, die Raumlage der Hilfsvorrichtung 13 bestimmen zu können, muss die Hilfsvorrichtung 13 mit Messmarken 22' versehen sein, die einer Messung durch die raumfeste Messvorrichtung 21 zugänglich sind. Diese Messmarken 22' können beispielsweise durch Retroreflektorkugeln 27' gebildet sein, deren Relativlagen gegenüber dem Sensortarget 16 in einem (der Einmessverfahren der optischen Messanordnung 1 vorgelagerten) Kalibrierprozess mit Hilfe einer taktilen Koordinatenmessmaschine ermittelt werden. Alternativ können diese Messmarken 22' dadurch gebildet sein, dass die Bohrungen 19 des Sensortargets 16 als Durchgangsbohrungen ausgestaltet sind, so dass die Lage der Bohrungen 19 durch eine Messung mittels der raumfesten Messvorrichtung 21 ermittelt werden und aus dieser Messung auf die Lage des Sensortargets 16 rückgeschlossen werden kann (unter der Voraussetzung, dass die lokale Wandstärke 29 der Hilfsvorrichtung 13 und die Stufenhöhe 18 des Sensortargets 16 bekannt ist).

Zum Einmessen der optischen Messanordnung 1 wird die Hilfsvorrichtung 13 auf die (an der Roboterhand 5 befestigte) optische Messanordnung 2 aufgesetzt. In diesem Zustand werden drei Messungen durchgeführt:
1. Mit Hilfe des Sensors 2 werden Messungen des Sensortargets 16 durchgeführt, aus denen die Raumlage des Sensorkoordinatensystems 10 gegenüber dem Sensortarget 16 ermittelt wird.
2. Mit Hilfe der raumfesten Messvorrichtung 21 werden Messungen der Messmarken 22' der Hilfsvorrichtung 13 durchgeführt, aus denen die Raumlage der Hilfsvorrichtung 13 (und somit auch die Lage des fest mit der Hilfsvorrichtung 13 verbundenen Sensortargets 16) in einem Koordinatensystem 20 der raumfesten Messvorrichtung 21 berechnet wird.
3. Mit Hilfe der raumfesten Messvorrichtung 21 wird die Raumlage der optischen Messanordnung 1 im Koordinatensystem 20 der raumfesten Messvorrichtung 21 ermittelt. Hierzu sind auf der optischen Messanordnung 1 Messmarken 22 vorgesehen, die einer Messung durch die raumfeste Messvorrichtung 21 zugänglich sind. Im vorliegenden Ausführungsbeispiel, bei dem die raumfeste Messvorrichtung 21 ein Lasertracker ist, werden diese Messmarken 22 durch Retroreflektorkugeln 27 gebildet, die auf dem Abstandshalter 3 und dem Gehäuse 2' des optischen Sensors 2 befestigt sind. Zur Befestigung der Retroreflektorkugeln 27 sind am Abstandshalter 3 und am Sensorgehäuse 2' Gewindebohrungen 24 vorgesehen, in die sogenannte "Nester" 25 eingeschraubt werden. Die "Nester" 25 sind als Ringscheiben ausgestaltet, in die die Retroreflektorkugeln 27 in einer hochgenau definierten Lage reproduzierbar eingelegt werden können. Die "Nester" 25 sind mit Magnetelementen versehen, so dass die Retroreflektorkugeln 27 - unabhängig von der räumlichen Ausrichtung der "Nester" 25 - sicher in den "Nestern" 25 fixiert und gehalten werden. In der Darstellung der Figur 2 sind nur einige Gewindebohrungen 24 mit "Nestern" 25 bestückt, und nur einige dieser "Nester" 25 sind mit darin fixierten Retroreflektorkugeln 27 dargestellt. Wie der Fachmann weiß, hat die Zahl und Lage der Messmarken 22 einen großen Einfluss auf die Genauigkeit, mit der die räumliche Lage der optischen Messanordnung gegenüber dem Koordinatensystem 20 der raumfesten Messvorrichtung 21 bestimmt werden kann. Eine sorgfältige Wahl der Messmarken 22 ist daher entscheidend für die Qualität des Einmessergebnisses.

Aus einer Kombination der Messungen 1., 2. und 3. kann die Lage des Sensorkoordinatensystems 10 relativ zu den auf der optischen Messanordnung 1 befestigten Messmarken 22 hochgenau bestimmt werden. Wird die optische Messanordnung 1 nun mit Hilfe des Roboters 6 in unterschiedliche Raumlagen bewegt, so kann für jede dieser Raumlagen aus einer Messung der Messmarken 22 auf die aktuelle Lage des Sensorkoordinatensystems 10 rückgeschlossen werden. Wurde die raumfeste Messvorrichtung 21 auf das Koordinatensystem 12 des Messobjekts 9 eingemessen, so kann die aktuelle Lage des Sensorkoordinatensystems 10 (und somit die Raumlage der durch den Sensor 2 gewonnenen Messdaten) im Koordinatensystem 12 des Messobjekts 9 (z.B. in einem Fahrzeugkoordinatensystem) berechnet werden. Zweckmäßigerweise wird daher - vor Beginn des aktuellen Messbetriebs - mit Hilfe der raumfesten Messvorrichtung 21 und unter Zuhilfenahme der Messmarken 22 die Raumlage der optischen Messanordnung 1 für alle diejenigen Raumlagen eingemessen, in denen während des Messbetriebs Messungen des Messobjekts 9 durchgeführt werden sollen.

Die Lagerung der Retroreflektorkugeln 27 in magnetischen "Nestern" 25 hat den Vorteil, dass die Retroreflektorkugeln 27 während des Messbetriebs entfernt werden können; dadurch wird im Messbetrieb das Gewicht der optischen Messanordnung 1 und somit die Belastung der Roboterhand 5 verringert; weiterhin wird der Raumbedarf der optischen Messanordnung 1 reduziert. Falls im Zuge des Messbetriebs (z.B. aufgrund eines Crashs des Messroboters 6) eine weitere Kalibration der optischen Messanordnung 1 bzw. des Messroboters 6 notwendig wird, können die Retroreflektorkugeln 27 jederzeit in reproduzierbarer Weise in die "Nester" 25 eingelegt werden.

Neben der oben beschriebenen Ausgestaltung der Messmarken 22 als Retroreflektorkugeln 27 sind beliebige andere Formen von Messmarken 22 möglich. Weiterhin kann die während des Einmessens stattfindende Erfassung der Messmarken 22 mit Hilfe des Lasertrackers 28 durch beliebige andere optische oder taktile Messmethoden ersetzt werden.

Die Hilfsvorrichtung 13 kann für optische Messanordnungen 1 mit unterschiedlichen Messprinzipien eingesetzt werden, insbesondere für Lichtschnittsensoren, CCD-Kameras mit Graubildverarbeitung, Streifenprojektionssensoren etc.

## Patentansprüche

1. Hilfsvorrichtung (13) zum Einmessen einer an einem Manipulator (6) montierbaren optischen Messanordnung (1) ,
wobei die Hilfsvorrichtung (13)
einen Befestigungsbereich (14) zur Fixierung der Hilfsvorrichtung (13) gegenüber der optischen Messanordnung (1) aufweist,
und ein Sensortarget (16) aufweist, das in einer solchen Weise auf der Hilfsvorrichtung (13) angeordnet ist, dass es in Zusammenbaulage der Hilfsvorrichtung (13) mit der optischen Messanordnung (1) in einem Messraum (17) des optischen Sensors (2) liegt,
wobei die Hilfsvorrichtung mit Messmarken (22') versehen ist.

2. Hilfsvorrichtung nach Anspruch 1
**dadurch gekennzeichnet,**
**dass** die Messmarken (22') als retroreflektierende Elemente (27') ausgebildet sind.

3. Verfahren zum Einmessen einer an einem Manipulator (6) montierbaren optischen Messanordnung (1), auf der Messmarken (22) vorgesehen sind,
mit den folgenden Verfahrensschritten:
an der optischen Messanordnung (1) wird eine Hilfsvorrichtung (13) nach Anspruch 1 oder 2 befestigt,
mit Hilfe des Sensors (2) werden Messwerte des Sensortargets (16) der Hilfsvorrichtung (13) erzeugt,
mit Hilfe einer weiteren Messvorrichtung (21) wird die Raumlage der Messmarken (22) der optischen Messanordnung und die Raumlage der Messmarken (22') der Hilfsvorrichtung (13) ermittelt,
aus einer Kombination der Messungen der weiteren Messvorrichtung (21) und der Messungen des Sensors (2) wird die Relativlage eines Sensorkoordinatensystems (10) gegenüber den Messmarken (22) der optischen Messanordnung (1) ermittelt.

4. Verfahren nach Anspruch 3
**dadurch gekennzeichnet,**
**dass** die weitere Messvorichtung ein Lasertracker (28) ist.

5. Verfahren nach Anspruch 3 oder 4
**dadurch gekennzeichnet,**
**dass** die optische Messanordnung (1) während der Durchführung des Einmessverfahrens an dem Manipulator (6) montiert ist.

## Claims

1. Auxiliary device (13) for calibrating an optical measuring arrangement (1) that can be mounted on a manipulator (6),
wherein the auxiliary device (13) comprises a fastening region (14) for fixing the auxiliary device (13) with respect to the optical measuring arrangement (1),
and comprises a sensor target (16) that is arranged in such a manner on the auxiliary device (13) that when the auxiliary device (13) is in the assembled state said sensor target lies with the optical measuring arrangement (1) in a measuring space (17) of the optical sensor (2),
wherein the auxiliary device is provided with reference marks (22').

2. Auxiliary device according to claim 1,
**characterised in that**
the reference marks (22') are embodied as retroreflective elements (27').

3. Method for calibrating an optical measuring arrangement (1) that can be mounted on a manipulator (6) and reference marks (22) are provided on said measuring arrangement, said method having the following method steps:
an auxiliary device (13) according to claim 1 or 2 is fastened to the optical measuring arrangement (1),
measured values of the sensor target (16) of the auxiliary device (13) are generated with the aid of the sensor (2),
the spatial position of the reference marks (22) of the optical measuring arrangement and the spatial position of the reference marks (22') of the auxiliary device (13) are determined with the aid of a further measuring device (21),
the relative position of a sensor coordinate system (10) is determined with respect to the reference marks (22) of the optical measuring arrangement (1) from a combination of the measurements of the further measuring device (21) and the measurements of the sensor (2).

4. Method according to claim 3,
**characterised in that**
the further measuring device is a laser tracker (28).

5. Method according to claim 3 or 4,
**characterised in that**
the optical measuring arrangement (1) is mounted on the manipulator (6) when the calibrating method is being performed.

## Revendications

1. Dispositif auxiliaire (13) pour calibrer un ensemble e mesure optique (1) qui peut être monté sur un manipulateur (6),
le dispositif auxiliaire (13) comportant une zone de fixation (14) pour la fixation du dispositif auxiliaire (13) face à l'ensemble de mesure optique (1), et comportant une cible de capteur (16), qui est disposée de telle manière sur le dispositif auxiliaire (13) qu'elle se trouve dans un espace de mesure (17) du capteur optique (2) lorsque le dispositif auxiliaire (13) et l'ensemble de mesure optique (1) sont assemblés,
le dispositif auxiliaire étant pourvu de repères de mesure (22').

2. Dispositif auxiliaire selon la revendication 1, **caractérisé en ce que**
les repères de mesure (22') sont réalisés sous la forme d'éléments rétroréfléchissants (27').

3. Procédé pour calibrer un ensemble de mesure optique (1) qui peut être monté sur un manipulateur (6) et sur lequel sont prévus des repères de mesure (22), comprenant les étapes de procédé suivantes :
un dispositif auxiliaire (13) selon la revendication 1 ou 2 est fixé sur l'ensemble mesure optique (1),
des valeurs de mesure de la cible de capteur (16) du dispositif auxiliaire (13) sont générées à l'aide du capteur (2),
la position dans l'espace des repères de mesure (22) de l'ensemble de mesure optique et la position dans l'espace des repères de mesure (22') du dispositif auxiliaire (13) sont déterminées à l'aide d'un autre ensemble de mesure (21) ,
la position relative d'un système de coordonnées du capteur (10) par rapport aux repères de mesure (22) de l'ensemble de mesure optique (1) est déterminée à partir d'une combinaison des mesures de l'autre ensemble de mesure (21) et des mesures du capteur (2).

4. Procédé selon la revendication 3,
**caractérisé en ce que**
l'autre ensemble de mesure est un laser tracker (28).

5. Procédé selon la revendication 3 ou 4,
**caractérisé en ce que**
l'ensemble de mesure optique (1) est monté sur le manipulateur (6) pendant l'exécution du procédé de calibrage.
